# EUROPÄISCHE PATENTSCHRIFT

(11) **EP 0 681 937 B1**
(45) Veröffentlichungstag und Bekanntmachung des Hinweises auf die Patenterteilung: **24.03.1999**
(21) Anmeldenummer: 95106877.4
(22) Anmeldetag: 06.05.1995
(51) Int. Cl.: B60K 25/00

(54) **Fahrzeugeinrichtung mit einem Antriebsmotor und mindestens zwei Nebenaggregaten**
Vehicle arrangement with one drive motor and at least two auxiliaries
Dispositif d'automobile avec un moteur d'entraînement et au moins deux auxiliaires

(30) Priorität: 09.05.1994 DE 4416390; 22.04.1995 DE 19514929
(43) Veröffentlichungstag der Anmeldung: 15.11.1995
(73) Patentinhaber: LuK Fahrzeug-Hydraulik GmbH & Co. KG, 61352 Bad Homburg (DE)
(72) Erfinder: Indlekofer, Norbert, D-61352 Bad Homburg (DE)
(74) Vertreter: Grosse, Rainer, Dipl.-Ing.

(56) Entgegenhaltungen:
- EP-A- 0 085 721

## Beschreibung

Die Erfindung betrifft eine Fahrzeugeinrichtung mit einem Antriebsmotor, insbesondere Verbrennungsmotor, dem mindestens zwei Nebenaggregate zugeordnet sind, wie beispielsweise eine Lenkhilfpumpe, ein Lüfter und/oder eine Anti-Blockiersystem-Pumpe usw., wobei der Antrieb der Nebenaggregate elektrisch und intervallartig nur dann erfolgt, wenn dies für die Betriebsführung erforderlich ist.

Fahrzeugantriebe, insbesondere die Antriebe von Personenkraftwagen, weisen einen Verbrennungsmotor auf, der gleichzeitig Nebenaggregate, wie Lüfter, Lenkhilfpumpe usw. antreibt. Da die Nebenaggregate nur einen kurzzeitigen, intervallartigen Betrieb zur Erfüllung ihrer Aufgaben benötigen, wurde vorgeschlagen, daß nicht der Verbrennungsmotor die Nebenaggregate kontinuierlich antreibt, sondern daß jedem Nebenaggregat ein Elektromotor zugeordnet ist, der jeweils stets nur dann eingeschaltet wird, wenn dies die Betriebsführung erfordert.

Die vorstehende Ausgestaltung ist jedoch relativ aufwendig und erfordert einen entsprechend hohen Materialeinsatz.

Aus der EP-A-0085721 geht eine Vorrichtung zum Antrieb einer Vakuumpumpe hervor. Diese Vorrichtung ist als elektrischer Anlasser ausgebildet, der über einen Wellenstummel des Anlassers fest mit einer Vakuumpumpe gekuppelt ist. Der andere Wellenstummel des Anlassers steht über einen Freilauf und ein Ritzel mit einer Brennkraftmaschine in Verbindung. Der Anlasser kann somit zum einen seine eigentliche Aufgabe erfüllen, nämlich die Brennkraftmaschine zu starten und steht darüber hinaus zur Verfügung, die Vakuumpumpe zu betreiben.

Der Erfindung liegt die Aufgabe zugrunde, eine Fahrzeugeinrichtung der eingangs genannten Art anzugeben, die einfacher und damit kostengünstiger ausgebildet ist.

Diese Aufgabe wird erfindungsgemäß dadurch gelöst, daß den Nebenaggregaten ein einziger Elektromotor zugeordnet ist und daß eines beziehungsweise mindestens eines der Nebenaggregate mittels eines Freilaufs zeitweise nicht in Drehmitnahme zum Elektromotor steht. Die vorstehende Formulierung deutet bereits an, daß die Erfindung nicht auf zwei Nebenaggregate beschränkt ist, sondern es können auch mehr als zwei Nebenaggregate vorgesehen sein, die jedoch nur von einem einzigen Elektromotor angetrieben werden. Dies erfolgt erfindungsgemäß derart, daß es mittels des schaltbaren Freilaufs möglich ist, bestimmte Nebenaggregate, beziehungsweise ein bestimmtes Nebenaggregat definiert vom Elektromotor zu trennen, so daß keine Drehmitnahme erfolgt. Dies geschieht zeitweise, wobei sich die Drehmitnahme beziehungsweise Drehnichtmitnahme nach der jeweiligen Betriebsführung richtet. Handelt es sich beispielsweise bei den Nebenaggregaten um einen Lüfter und um eine Lenkhilfpumpe, so wird der Elektromotor nur dann eingeschaltet, wenn mindestens eine der beiden Nebenaggregate aufgrund der Betriebsführung des Fahrzeugs in Aktion gesetzt werden muß. Kommt es zu dem Zustand, daß von beiden Nebenaggregaten eine Funktion verlangt wird, so werden entweder beide Nebenaggregate gleichzeitig betrieben, was eine entsprechende Dimensionierung des Elektromotors voraussetzt oder es erfolgt -nach bestimmten Kriterien- eine Drehmitnahme zum Elektromotor mit dem einen und erst danach eine Drehmitnahme zum Elektromotor mit dem anderen Nebenaggregat, das heißt der Betrieb wird somit intervallartig und alternierend durchgeführt.

Nach einer Ausführungform der Erfindung ist vorgesehen, daß der Freilauf durch eine Freilaufeinrichtung realisiert ist, die in einer Drehrichtung eine Drehmitnahme und in der anderen Drehrichtung keine Drehmitnahme zwischen Elektromotor und Nebenaggregat aufweist, wobei der Elektromotor drehrichtungsumschaltbar ausgebildet ist. Diese Ausgestaltung ermöglicht es, beispielsweise bei Rechtslauf des Elektromotors eine Drehmitnahme des einen Nebenaggregats und bei Linkslauf des Elektromotors eine Drehmitnahme des anderen Nebenaggregats zur realisieren, wobei dann jeweils das andere Nebenaggregat aufgrund des Freilaufes nicht in Aktion tritt. Auf diese Art und Weise ist es sehr einfach möglich, nur durch Drehrichtungsumschaltung eines der beiden Nebenaggregate gezielt auszuwählen. Die Dimensionierung des Elektromotors richtet sich nach den Anforderungen des Nebenaggregats, das die größte Leistung benötigt. Vorzugsweise werden Nebenaggregate einem Elektromotor zugeordnet, die etwa die gleiche Antriebsleistung erfordern.

Eine weitere Ausführungsform der Erfindung sieht vor, daß die Freilaufeinrichtung eine schaltbare Freilaufeinrichtung ist, die in einer Schaltstellung keine Drehmitnahme aufweist, so daß keine Drehmitnahme zwischen Elektromotor und Nebenaggregat besteht und in einer anderen Schaltstellung eine Drehmitnahme zwischen Elektromotor und Nebenaggregat bewirkt. Mittels Ansteuerung der schaltbaren Freilaufeinrichtung lassen sich somit mittels eines Elektromotors mehrere Nebenaggregate intervallartig nacheinander betreiben, wobei die schaltbare Freilaufeinrichtung stets das Nebenaggregat mit dem Elektromotor verbindet, das für die Betriebsführung erforderlich ist.

Nach einem bevorzugten Ausführungsbeispiel der Erfindung ist vorgesehen, daß der Elektromotor beidseitig einen Wellenstutzen aufweist (durchgehende Welle), wobei der eine Wellenstutzen mit einem ersten, rechtsdrehenden Freilauf und der zweite Wellenstutzen mit einem zweiten, linksdrehenden Freilauf in Verbindung steht und der erste Freilauf mit einem ersten Nebenaggregat und der Zweite Freilauf mit einem zweiten Nebenaggregat verbunden ist. Je nach Drehrichtung des Elektromotors wird somit der eine Freilauf in Drehmitnahme und der andere Freilauf in Freilaufstellung gelangen. Ändert sich die Drehrichtung des Elektromotors, so wird der zuvor in Freilaufstellung befindliche Freilauf nunmehr die Drehmitnahme einnehmen und der zuvor in Drehmitnahme stehende Freilauf außer Drehmitnahme gebracht. Dies hat zur Folge, daß -in Abhängigkeit von der Drehrichtung des Elektromotors- entweder das eine, erste oder das andere, zweite Nebenaggregat in Betrieb genommen wird.

An dieser Stelle soll besonders hervorgehoben werden, daß bei der erfindungsgemäßen Fahrzeugeinrichtung der Elektromotor nicht permanent in Betrieb ist, sondern daß er nur dann eingeschaltet wird, wenn dies die Betriebsführung erfordert, wenn also mindestens eines der Nebenaggregate beispielsweise zu Kühlzwecken oder zum Druckaufbau für das Anti-Blockiersystem eingeschaltet werden muß. Insofern erfolgt eine besonders energiesparende Betriebsführung und es kommt hinzu, daß durch die Zuordnung nur eines einzigen Elektromotors zu mehreren Nebenaggregaten Gewicht und Kosten eingespart werden.

Ein weiteres bevorzugtes Ausführungsbeispiel der Erfindung sieht vor, daß ein Wellenstutzen des Elektromotors, der drehrichtungsumschaltbar ausgebildet ist, zwei Freiläufe antreibt, wobei der eine Freilauf ein rechtsdrehender Freilauf und der andere Freilauf ein linksdrehender Freilauf ist und die beiden Freiläufe jeweils mit einem Nebenaggregat verbunden sind. Die Vorzüge dieser Anordnung wurden bereits beim vorstehend erläuternden Ausführungsbeispiel eingegangen. Insofern wird darauf verwiesen.

Vorzugsweise kann vorgesehen sein, daß ein Wellenstutzen des Elektromotors, der nur eine Drehrichtung aufzuweisen braucht, über mindestens zwei schaltbare Freilaufeinrichtungen mit mindestens zwei Nebenaggregaten derart betreibbar ist, daß sich eine der Freilaufeinrichtungen außer Drehmitnahme und die andere Freilaufeinrichtung in Drehmitnahme und umgekehrt befindet. Durch alternierendes Verbinden beziehungsweise Freilaufen der Nebenaggregate ist es daher möglich, stets das Nebenaggregat mit einem Elektromotor zu betreiben, das für die Betriebsführung, beispielsweise nach einer Prioritätenregelung erforderlich ist.

Nach einem bevorzugten Ausführungsbeispiel der Erfindung ist vorgesehen, daß ein Wellenstutzen des Elektromotors, der vorzugsweise nur eine Drehrichtung aufzuweisen braucht, permanent mit einem Nebenaggregat in Drehmitnahme steht und daß zusätzlich über eine schaltbare Freilaufeinrichtung mindestens ein weiteres Nebenaggregat an den Elektromotor anschließbar ist. In dieser Ausgestaltung kann es also vorkommen, daß der Elektromotor zwei Nebenaggregate gleichzeitig betreibt. Dies erfordert eine entsprechende Dimensionierung des Elektromotors. Vorteilhaft ist jedoch, daß die Drehmitnahme mit den beiden Nebenaggregaten nicht permanent besteht, sondern nur zeitweise, steuerbar über die schaltbare Freilaufeinrichtung, so daß ein entsprechend optimaler Betrieb durchgeführt werden kann.

Vorzugsweise kann vorgesehen sein, daß ein Anlassermotor des Antriebsmotors (Verbrennungsmotors) den Elektromotor bildet. Insofern wird der elektrische Anlasser, der für das Starten des Verbrennungsmotors erforderlich ist, für eine weitere Funktion genutzt, nämlich um mindestens ein Nebenaggregat zu betreiben. Da nach der Anlaßphase des Verbrennungsmotors der Anlassermotor für derartige Zwecke zur Verfügung steht, da er seine Anlaßfunktion nach Anspringen des Verbrennungsmotors nicht mehr ausüben muß, ist eine besonders wirtschaftliche Lösung gegeben. Um die Nebenaggregate entsprechend betreiben zu können, ist es denkbar, daß ein bisheriger, üblicher Anlassermotor entsprechende Modifikationen erfährt.

Vorteilhaft ist ferner eine Steuereinrichtung, die einerseits überhaupt darüber entscheidet, ob und wann der Elektromotor eingeschaltet wird und andererseits die möglicherweise erforderliche Drehrichtungsänderung des Elektromotors vorgibt und/oder die schaltbare Freilaufeinrichtung beziehungsweise die schaltbaren Freilaufeinrichtungen nach Bedarf zum Betreiben der Nebenaggregate ansteuert. Insbesondere kann die Steuereinrichtung eine Prioritätsschaltung aufweisen, die -nach der Wichtigkeitentscheidet, welches Nebenaggregat zuerst betrieben werden soll, beziehungsweise welches Nebenaggregat abgeschaltet und welches andere Nebenaggregat dafür zugeschaltet wird, wenn die Betriebsführung den gleichzeitigen Betrieb zweier Nebenaggregate fordert. Läuft beispielsweise der Lüftermotor und fordert das Lenkhilfesystem einen Aufbau des Betriebsdrucks für dieses System, so ist es für die Sicherheit des Fahrzeugführers erforderlich, daß die Lüftung ausgeschaltet und der Druckaufbau für das Lenknilfesystem betrieben wird. Eine höhere Priorität hat somit die Lenkhilfpumpe gegenüber dem Lüfterbetrieb.

Die Erfindung ist nicht auf die in der Anmeldung genannten Nebenaggregate wie Kühlerlüfter, Lenkhilfpumpe, ABS-Pumpe usw. beschränkt, sondern kann selbstverständlich auch mit weiteren Nebenaggregaten zusammenwirken, die hier nicht namentlich benannt sind.

Die Zeichnungen veranschaulichen die Erfindung anhand von Ausführungsbeispielen und zwar zeigt:
- Figur 1: ein Prinzipschaltbild gemäß dem Ausführungsbeispiel einer ersten Fahrzeugeinrichtung,
- Figur 2: ein weiteres Ausführungsbeispiel,
- Figur 3: ein weiteres Ausführungsbeispiel und
- Figur 4: ein letztes Ausführungsbeispiel.

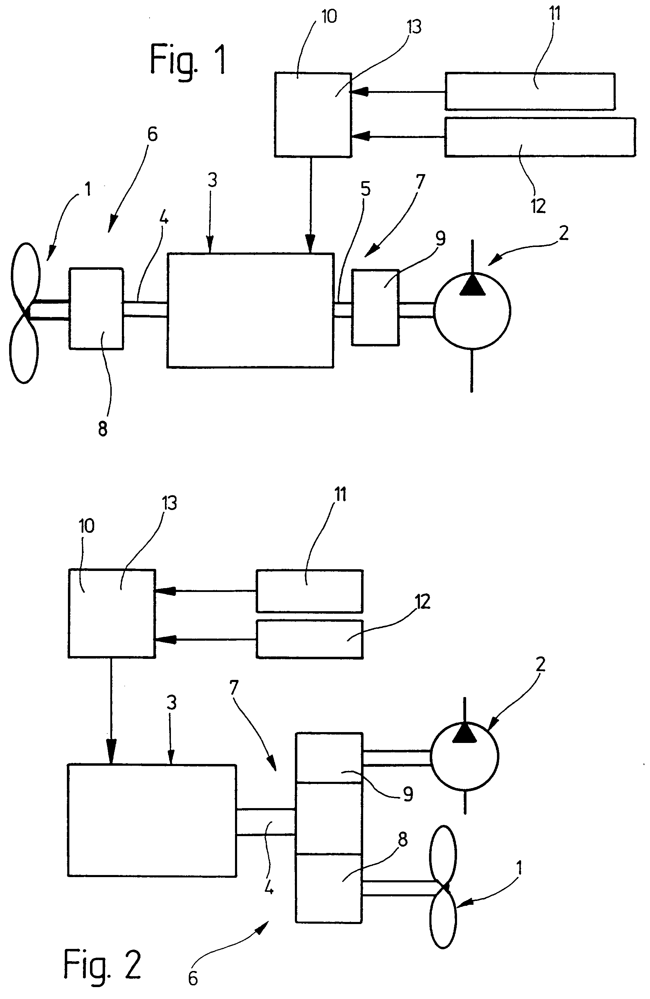

Die Figur 1 zeigt eine Fahrzeugeinrichtung, mit einem nicht dargestellten Antriebsmotor, beispielsweise einem Verbrennungsmotor, sowie zwei Nebenaggregaten 1 und 2, die von einem gemeinsamen Elektromotor 3 angetrieben werden können. Bei dem Nebenaggregat 1 kann es sich beispielsweise um einen Lüfter handeln, der den nicht dargestellten Verbrennungsmotor bei Bedarf kühlt. Das Nebenaggregat 2 kann beispielsweise eine Lenkhilfpumpe sein, also eine Einrichtung, die dem Aufbau des Betriebsdrucks für die Servolenkung eines Kraftfahrzeugs erzeugt. Die Betriebsführung des Fahrzeugs bringt es mit sich, daß derartige Nebenaggregate nicht permanent betrieben werden müssen. So hat sich beispielsweise gezeigt, daß der Lüfter nur zu 20% der Fanrzeug-Betriebszeit in Betrieb genommen werden muß und daß eine Servolenkunterstützung nur zu 10% bis 30% der Fahrzeit benötigt wird.

Aus der Figur 1 ist ersichtlich, daß der Elektromotor 3 auf der einen Seite einen Wellenstutzen 4 und auf der anderen Seite einen Wellenstutzen 5 aufweist. Die Wellenstutzen 4, 5 stehen mit einem Freilauf 6 in Verbindung, der als Freilaufeinrichtung 7 ausgebildet ist und einen ersten, rechtsdrehenden Freilauf 8 sowie einen zweiten, linksdrehenden Freilauf 9 besitzt. Der Wellenstutzen 4 steht mit dem Freilauf 8 und der Wellenstutzen 5 mit dem Freilauf 9 in Verbindung. Der Freilauf 8 wiederum wirkt mit dem ersten Nebenaggregat 1 und der Freilauf 9 mit dem zweiten Nebenaggregat 2 zusammen. Dem Elektromotor 3 ist eine Steuereinrichtung 10 zugeordnet, die ihre Informationen von Sensoren 11, 12 erhält. Bei der Steuereinrichtung 10 kann es sich beispielsweise um eine ganz einfache elektrische Einrichtung, beispielsweise einen Schalter oder dergleichen handeln, es ist jedoch auch möglich, daß es sich hier um das Steuergerät des Kraftfahrzeugs, also um eine aufwendige Elektronik, handelt. Die Sensoren 11, 12 überwachen die Betriebsführung des Kraftfahrzeugs, hinsichtlich der Temperatur und des Zustands des Lenkhilfesystems. Übersteigt die Temperatur des Antriebsmotors einen bestimmten Wert, so steuert der Sensor 11 die Steuereinrichtung 10 an, die dann ihrerseits den Elektromotor 3 einschaltet, und zwar in einer derartigen Drehrichtung, daß der Freilauf 8 keine Freilauffunktion, sondern eine Mitnahmefunktion aufweist, wodurch der Wellenstutzen 4 mit dem Lüfter (Nebenaggregat 1) in Verbindung steht und eine entsprechende Kühlung herbeigeführt wird. Sensiert der Sensor 12, daß die Lenknilfpumpe (Nebenaggregat 2) in Betrieb genommen werden muß, so signalisiert er dies der Steuereinrichtung 10, die den Elektromotor 3 -gegenüber dem Lüfterbeispiel- in die andere Drehrichtung schaltet, wodurch über den Freilauf 9 -der in Mitnahmerichtung betrieben wird- das Nebenaggregat 2 in Funktion gesetzt wird. Aufgrund der gegenläufigen Freiläufe 8 und 9 ist stets gewährleistet, daß bei Drehmitnahme des einen Nebenaggregats das andere Nebenaggregat nicht in Betrieb genommen wird.

Da verschiedene Nebenaggregate hinsichtlich der Betriebsführung einer unterschiedliche Priorität in der Wichtigkeit ihres Betriebes aufweisen, ist eine Prioritätsschaltung 13 in der Steuereinrichtung 10 enthalten, die darüber entscheidet, wann und welche der beiden Nebenaggregate 1 beziehungsweise 2 in Betrieb beziehungsweise vorrangig in Betrieb genommen werden.

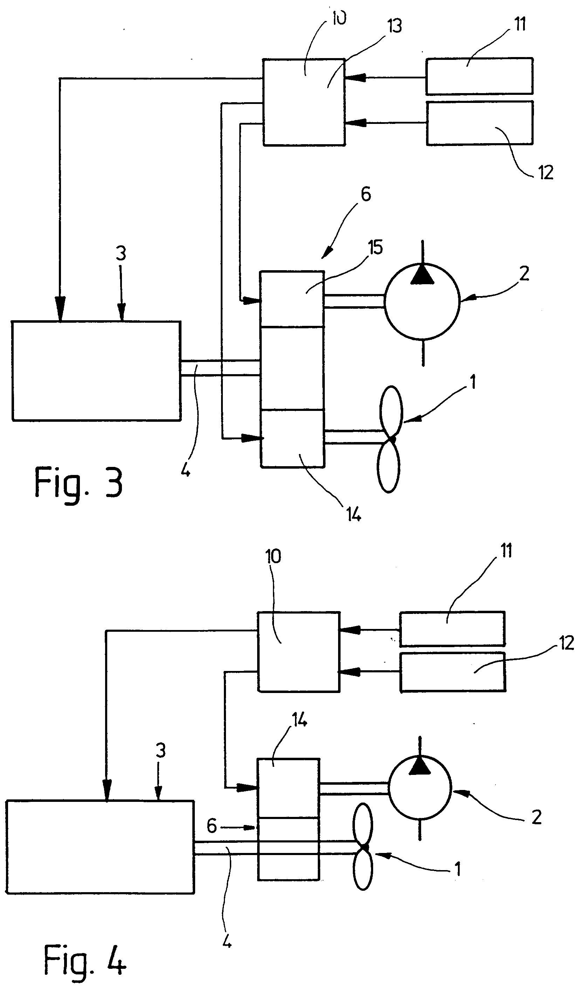

Die Figur 2 zeigt eine der Figur 1 entsprechende Anordnung, wobei der Elektromotor 3 jedoch nur einen Wellenstutzen 4 aufweist, der zwei Freiläufe 8 und 9 gleichzeitig antreibt, wobei der eine Freilauf 8 als rechtslaufender Freilauf und der andere Freilauf 9 als linkslaufender Freilauf ausgebildet ist. Dies hat zur Folge, daß je nach Drehrichtung des Wellenstutzens 4 entweder der eine Freilauf, zum Beispiel 8, in Drehmitnahmefunktion und der andere Freilauf 9 nicht in Drehmitnahmefunktion oder -bei anderer Drehrichtung- der Freilauf 9 in Drehmitnahmefunktion und der Freilauf 8 nicht in Drehmitnahmefunktion tritt, so daß in Abhängigkeit von der Drehrichtung entweder das Nebenaggregat 1 oder das Nebenaggregat 2 betätigt wird, wenn der Elektromotor 3 in Betrieb genommen wird.

Die Figur 3 zeigt ein weiteres Ausführungsbeispiel, bei dem der Elektromotor 3 mit einem Freilauf 6 mittels seines Wellenstutzens 4 verbunden ist, wobei der Freilauf 6 zwei schaltbare Freiläufe 14 und 15 aufweist. Hierdurch läßt sich -je nach Stellung der Freiläufe 14 und 15- der Elektromotor 3 mit dem Nebenaggregat 1, beispielsweise einem Lüfter, oder mit dem Nebenaggregat 2, beispielsweise eine Lenkhilfpumpe, in Drehmitnahme bringen. Die Freiläufe 14, 15 werden von der Steuereinrichtung 10 derart angesteuert, daß sich in Drehmitnahme des einen Freilaufs 14 beziehungsweise 15, der andere Freilauf 15 beziehungsweise 14, in Nichtdrehmitnahme befindet. Hierdurch ist es möglich, mittels des einen Elektromotors 3 alternativ und vorzugsweise intervallartig die Nebenaggregate 1 beziehungsweise 2 zu betreiben.

Das Ausführungsbeispiel der Figur 4 zeigt einen Aufbau, bei dem der Elektromotor 3 permanent mit dem Nebenaggregat 1 mittels des Wellenstutzens 4 verbunden ist. Der Freilauf 6 ist derart ausgebildet, daß -aufgrund einer Ansteuerung durch die Steuereinrichtung 10- gleichzeitig zum Betrieb des Nebenaggregats 1, das Nebenaggregat 2 in Betrieb genommen werden kann. Mithin läßt sich mittels des Freilaufs 6 das Nebenaggregat 2 mit dem Wellenstutzen 4 durch entsprechende Ansteuerung in Drehmitnahme bringen. Die Drehmitnahme erfolgt selbstverständlich nur dann, wenn dies die Betriebsführung des Kraftfahrzeugs erfordert. Da zeitweise von dem Elektromotor 3 zwei (oder noch weitere) Nebenaggregate betrieben werden, ist dieser entsprechend zu dimensionieren.

Da erfindungsgemäß dem Elektromotor 3 nicht nur ein, sondern mehrere Nebenaggregate zugeordnet sind, die abwechselnd oder gemeinsam betrieben werden, werden Gewicht, Einbauraum und Kosten gespart. Um die gemeinsame oder alternative Inbetriebnahme der einzelnen Nebenaggregate vornehmen zu können, ist es lediglich erforderlich, die Steuereinrichtung 10 vorzusehen, die einerseits den Elektromotor 3 an- und ausschaltet und andererseits bestimmt, welches Nebenaggregat wann in Drehmitnahme beziehungsweise nicht in Drehmitnahme steht. Auf diese Art und Weise lassen sich zwei oder mehrere Nebenaggregate mit einem gemeinsamen Elektromotor 3 nutzen.

Vorzugsweise werden diejenigen Nebenaggregate, die etwa einen gleichen Leistungsbedarf aufweisen, zum Beispiel 400 W für eine Lenkhilfpumpe und 400 W für einen Kühlerlüfter, einem Elektromotor 3 zugeordnet, wobei zwei gegenläufige Freiläufe 8, 9 vorgesehen sind, damit in der einen Drehrichtung die Lenkhilfpumpe und in der anderen Drehrichtung der Kühlerlüfter angetrieben wird. Über die entsprechenden Signale der Sensoren 11 und 12 wird entschieden, ob "Lenken" oder "Kühlen" durch entsprechende Drehrichtung des Elektromotors 3 erfolgen soll. Die erwähnte Prioritätsschaltung sorgt stets dafür, daß dasjenige Nebenaggregat zuerst zum Einsatz gelangt, das für eine sichere Betriebsführung wichtiger ist. Neben den erwähnten Freiläufen 8, 9 ist es auch möglich, beziehungsweise zusätzlich denkbar, daß schaltbare Freiläufe eingesetzt werden, die -je nach Schaltstellung- darüber bestimmen, welches Nebenaggregat beziehungsweise welche Nebenaggregate wann mit dem Elektromotor 3 in Drehmitnahme beziehungsweise nicht in Drehmitnahme stehen.

Betreibt der Elektromotor zwei Nebenaggregate gleichzeitig, wobei der eine permanent verbunden und der andere bei Bedarf zuschaltbar ist, so ist beispielsweise bei je 400 W Leistungsbedarf ein 800 W-Elektromotor einzusetzen.

## Patentansprüche

1. Fahrzeugeinrichtung mit einem Antriebsmotor, insbesondere Verbrennungsmotor, dem mindestens zwei Nebenaggregate zugeordnet sind, wie beispielsweise eine Lenkhilfpumpe, ein Lüfter und/oder eine Anti-Blockiersystem-Pumpe usw., wobei der Antrieb der Nebenaggregate elektrisch und intervallartig nur dann erfolgt, wenn dies für die Betriebsführung erforderlich ist, **dadurch gekennzeichnet,** daß den Nebenaggregaten (1,2) ein einziger Elektromotor (3) zugeordnet ist und daß eines beziehungsweise mindestens eines der Nebenaggregate (1,2) mittels eines Freilaufs (6,8,9,14,15) zeitweise nicht in Drehmitnahme zum Elektromotor (3) steht.

2. Fahrzeugeinrichtung nach Anspruch 1, **dadurch gekennzeichnet,** daß der Freilauf (6) eine Freilaufeinrichtung (7) ist, die in einer Drehrichtung eine Drehmitnahme und in der anderen Drehrichtung keine Drehmitnahme zwischen Elektromotor (3) und Nebenaggregat (1, 2) aufweist und daß der Elektromotor (3) drehrichtungsumschaltbar ausgebildet ist.

3. Fahrzeugeinrichtung nach einem der vorhergehenden Ansprüche, **dadurch gekennzeichnet,** daß der Freilauf (6) ein schaltbarer Feilauf (14, 15) ist, der in einer Schaltstellung keine Drehmitnahme zwischen Elektromotor (3) und Nebenaggregat (1, 2) und in einer anderen Schaltstellung eine Drehmitnahme zwischen Elektromotor (3) und Nebenaggregat (1, 2) bewirkt.

4. Fahrzeugeinrichtung nach einem der vorhergehenden Ansprüche, **dadurch gekennzeichnet,** daß der Elektromotor (3) beidseitig einen Wellenstutzen (4, 5) aufweist, wobei der eine Wellenstutzen (4) mit einem ersten, rechtsdrehenden Freilauf (8) und der zweite Wellenstutzen (5) mit einem zweiten, linksdrehenden Freilauf (9) in Verbindung steht und der erste Freilauf (8) mit einem ersten Nebenaggregat (1) und der zweite Freilauf (9) mit einem zweiten Nebenaggregat (2) verbunden ist.

5. Fahrzeugeinrichtung nach einem der vorhergehenden Ansprüche, **dadurch gekennzeichnet,** daß ein Wellenstutzen (4) des Elektromotors (3) zwei Freiläufe (8, 9) antreibt, wobei der eine Freilauf (8) ein rechtsdrehender Freilauf und der andere Freilauf (9) ein linksdrehender Freilauf ist und die beiden Freiläufe (8, 9) jeweils mit einem Nebenaggregat (1, 2) verbunden sind.

6. Fahrzeugeinrichtung nach einem der vorhergehenden Ansprüche, **dadurch gekennzeichnet,** daß ein Wellenstutzen (4) des Elektromotors (3) über mindestens zwei schaltbare Freiläufe (14, 15) mit mindestens zwei Nebenaggregaten (1, 2) derart betreibbar ist, daß sich einer der Freiläufe (14, 15) nicht in Drehmitnahme und der andere Freilauf (15, 14) in Drehmitnahme und umgekehrt befindet.

7. Fahrzeugeinrichtung nach einem der vorhergehenden Ansprüche, **dadurch gekennzeichnet,** daß ein Wellenstutzen (4) des Elektromotors (3) permanent mit einem Nebenaggregat (1) verbunden ist und daß zusätzlich über mindestens einen schaltbaren Freilauf (14) mindestens ein weiteres Nebenaggregat (2) mit dem Elektromotor (3) verbindbar ist.

8. Fahrzeugeinrichtung nach einem der vorhergehenden Ansprüche, **dadurch gekennzeichnet,** daß ein Anlassermotor des Antriebsmotors (Verbrennungsmotors) den Elektromotor (3) bildet.

9. Fahrzeugeinrichtung nach einem der vorhergehenden Ansprüche, **gekennzeichnet durch** eine Steuereinrichtung (10) die das Ein- und Ausschalten des Elektromotors (3) vornimmt und die die Drehrichtungsänderung des Elektromotors (3) vorgibt und/oder der schaltbare Freilauf (14) beziehungsweise die schaltbaren Freiläufe (14, 15) nach Bedarf zum Betreiben der Nebenaggregate (1, 2) ansteuert.

10. Fahrzeugeinrichtung nach einem der vorhergehenden Ansprüche, **dadurch gekennzeichnet**, daß die Steuereinrichtung (10) eine prioritätsschaltung (13) aufweist, die -nach der Wichtigkeit- entscheidet, welches Nebenaggregat (1, 2) zuerst betrieben werden soll beziehungsweise weiterbetrieben werden soll, wenn die Betriebsführung den gleichzeitigen Betrieb beider Nebenaggregate (1, 2) fordert.

## Claims

1. A vehicle arrangement having a driving engine, in particular a combustion engine, with which at least two auxiliaries are associated, such as a power-steering pump, a fan and/or an ABS pump, etc., wherein the auxiliaries are driven electrically and intermittently only when this is necessary for operation, characterised in that a single electric motor (3) is associated with the auxiliaries (1, 2) and in that the rotational drive of one or at least one of the auxiliaries (1, 2) by the electric motor (3) is intermittently interrupted by means of a freewheel (6, 8, 9, 14, 15).

2. A vehicle arrangement according to claim 1, characterised in that the freewheel (6) is a freewheel arrangement (7) providing a rotary drive connection between the electric motor (3) and the auxiliary (1, 2) in one direction of rotation and no rotary drive connection in the other direction of rotation, and in that the direction of rotation of the electric motor (3) is reversible.

3. A vehicle arrangement according to either one of the preceding claims, characterised in that the freewheel (6) is a switchable freewheel (14, 15) producing no rotary drive connection between the electric motor (3) and the auxiliary (1, 2) in one switching position and producing a rotary drive connection between the electric motor (3) and the auxiliary (1, 2) in the other switching position.

4. A vehicle arrangement according to any one of the preceding claims, characterised in that the electric motor (3) has a shaft connection (4, 5) on both sides, the one shaft connection (4) being connected to a first, clockwise freewheel (8), and the second shaft connection (5) being connected to a second, anticlockwise freewheel (9), and the first freewheel (8) being connected to a first auxiliary (1) and the second freewheel (9) being connected to a second auxiliary (2).

5. A vehicle arrangement according to any one of the preceding claims, characterised in that a shaft connection (4) of the electric motor (3) drives two freewheels (8, 9), the one freewheel (8) being a clockwise freewheel and the other freewheel (9) being an anticlockwise freewheel and the two freewheels (8, 9) each being connected to an auxiliary (1, 2).

6. A vehicle arrangement according to any one of the preceding claims, characterised in that a shaft connection (4) of the electric motor (3) is operable via at least two switchable freewheels (14, 15) with at least two auxiliaries (1, 2) in such a manner that one of the freewheels (14, 15) is not in rotary drive connection and the other freewheel (15, 14) is in rotary drive connection and vice versa.

7. A vehicle arrangement according to any one of the preceding claims, characterised in that a shaft connection (4) of the electric motor (3) is permanently connected to an auxiliary (1) and in that at least one further auxiliary (2) is additionally connectable to the electric motor (3) via at least one switchable freewheel (14).

8. A vehicle arrangement according to any one of the preceding claims, characterised in that a starter motor of the driving engine (combustion engine) forms the electric motor (3).

9. A vehicle arrangement according to any one of the preceding claims, characterised by a control arrangement (10) which switches the electric motor (3) on and off and which determines the change in rotational direction of the electric motor (3) and/or activates the switchable freewheel (14) or the switchable freewheels (14, 15) as required for operation of the auxiliaries (1, 2).

10. A vehicle arrangement according to any one of the preceding claims, characterised in that the control arrangement (10) has a priority circuit (13) which decides, on the basis of importance, which auxiliary (1, 2) is to be operated first or is to carry on being operated if operation requires the simultaneous operation of the two auxiliaries (1, 2).

## Revendications

1. Dispositif d'automobile avec un moteur d'entraînement, notamment un moteur à combustion, auquel sont attribués au moins deux organes secondaires, comme par exemple une pompe de servo-direction, un ventilateur et/ou une pompe de système anti-bloqueur de freinage, etc., l'entraînement des organes secondaires, électrique ou par intervalles, n'ayant lieu que si cela est nécessaire pour la conduite du service, **caractérisé en ce** qu'un seul moteur électrique (3) est attribué aux organes secondaires (1, 2) et qu'un ou au moins l'un des organes secondaires (1, 2) n'est pas entraîné en rotation de manière intermittente au moyen d'une roue libre (6, 8, 9, 14, 15) par rapport au moteur électrique (3).

2. Dispositif d'automobile selon la revendication 1, **caractérisé en ce que** la roue libre (6) est un dispositif à roue libre (7) qui présente un entraînement en rotation dans un sens de rotation et ne présente pas d'entraînement en rotation entre le moteur électrique (3) et l'organe secondaire (1, 2) dans l'autre sens de rotation et que le moteur électrique (3) est formé de manière à pouvoir être inversé dans son sens de rotation.

3. Dispositif d'automobile selon l'une des revendications précédentes, **caractérisé en ce que** la roue libre (6) est une roue libre commutable (14, 15) qui, dans une position de commutation, ne provoque pas d'entraînement en rotation entre le moteur électrique (3) et l'organe secondaire (1, 2) et, dans une autre position de commutation, provoque un entraînement en rotation entre le moteur électrique (3) et l'organe secondaire (1, 2).

4. Dispositif d'automobile selon l'une des revendications précédentes, **caractérisé en ce que** le moteur électrique (3) présente un manchon d'arbre (4, 5) des deux côtés, l'un des manchons d'arbre (4) étant en relation avec une première roue libre (8) tournant à droite et le second manchon d'arbre (5) avec une seconde roue libre (9) tournant à gauche, et que la première roue libre (8) est raccordée à un premier organe secondaire (1) et la seconde roue libre (9) à un second organe secondaire (2).

5. Dispositif d'automobile selon l'une des revendications précédentes, **caractérisé en ce** qu' un manchon d'arbre (4) du moteur électrique (3) entraîne deux roues libres (8, 9), l'une des roues libres (8) étant une roue libre tournant à droite et l'autre roue libre (9) étant une roue libre tournant à gauche et les deux roues libres (8, 9) étant raccordées chacune à un organe secondaire (1, 2).

6. Dispositif d'automobile selon l'une des revendications précédentes, **caractérisé en ce** qu'un manchon d'arbre (4) du moteur électrique (3) peut être actionné avec au moins deux organes secondaires (1, 2) par l'intermédiaire d'au moins deux roues libres (14, 15) commutables de telle manière que l'une des roues libres (14, 15) ne se trouve pas en entraînement en rotation et que l'autre roue libre (15, 14) se trouve en entraînement en rotation et inversement.

7. Dispositif d'automobile selon l'une des revendications précédentes, **caractérisé en ce** qu'un manchon d'arbre (4) du moteur électrique (3) est raccordé en permanence à un organe secondaire (1) et qu'en plus au moins un autre organe secondaire (2) peut être raccordé au moteur électrique (3) par l'intermédiaire d'au moins une roue libre (14) commutable.

8. Dispositif d'automobile selon l'une des revendications précédentes, **caractérisé en ce** qu'un démarreur du moteur d'entraînement (moteur à combustion) forme le moteur électrique (3).

9. Dispositif d'automobile selon l'une des revendications précédentes, **caractérisé par** un dispositif de commande (10) qui procède à l'allumage et à l'arrêt du moteur électrique (3) et qui détermine le changement du sens de rotation du moteur électrique (3) et/ou commande la roue libre (14) commutable ou les roues libres (14, 15) commutables selon les besoins pour l'actionnement des organes secondaires (1, 2).

10. Dispositif d'automobile selon l'une des revendications précédentes, **caractérisé en ce que** le dispositif de commande (10) présente un changement de vitesse de priorité (13) qui - en fonction de l'importance - décide quel organe secondaire (1, 2) doit être actionné en premier ou doit poursuivre sa marche lorsque la conduite du service exige le fonctionnement simultané des deux organes secondaires (1, 2).
